(19) **Europäisches Patentamt / European Patent Office / Office européen des brevets**

(11) **EP 1 857 496 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(51) Int Cl.:
***C08J 5/18*** *(2006.01)*

(21) Anmeldenummer: **07009397.6**

(22) Anmeldetag: **10.05.2007**

(54) **Biaxial orientierte Polyesterfolie für die Blechlaminierung**

Biaxial oriented Polyesterfilm for metal sheet lamination

Film de polyester à orientation biaxiale pour doublage de tôles métalliques

(84) Benannte Vertragsstaaten:
**AT BE CH DE FR GB IT LI LU NL TR**

(30) Priorität: **18.05.2006 DE 102006023293**

(43) Veröffentlichungstag der Anmeldung:
**21.11.2007 Patentblatt 2007/47**

(73) Patentinhaber: **Mitsubishi Polyester Film GmbH**
**65203 Wiesbaden (DE)**

(72) Erfinder:
• **Konrad, Matthias , Dr.**
**65719 Hofheim (DE)**
• **Kuhmann, Bodo**
**65594 Runkel (DE)**
• **Hilkert, Gottfried, Dr.**
**55291 Saulheim (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 1 442 876      EP-A1- 1 380 415**

• **DATABASE WPI Week 199934 Thomson Scientific, London, GB; AN 1999-400261 XP002441000 & JP 11 158301 A (TORAY IND INC) 15. Juni 1999 (1999-06-15)**
• **DATABASE WPI Week 200055 Thomson Scientific, London, GB; AN 2000-581496 XP002441001 & JP 2000 177085 A (TORAY IND INC) 27. Juni 2000 (2000-06-27)**

EP 1 857 496 B1

**Beschreibung**

Gebiet der Erfindung

Die Erfindung betrifft biaxial orientierte Polyesterfolien, welche sich zur Laminierung mit Blechen eignen; insbesondere betrifft die Erfindung eine Polyesterfolie, welche (bezogen auf die Masse an Polyester) 1 bis 8 Gew.-% Isophthalat-abgeleitete Einheiten enthält und sowohl Partikel mit einem mittleren Durchmesser von 0.1 bis 2.0 $\mu$m als auch solche mit einem mittleren Durchmesser von > 2.5 $\mu$m bis < 8 $\mu$m enthält. Weiterhin betrifft die Erfindung ein Verfahren zur Herstellung dieser Folien.

Hintergrund

Polyesterfolien haben aufgrund ihrer hervorragenden optischen und mechanischen Eigenschaften vielseitige Anwendungsgebiete. Ein Anwendungsgebiet ist die Blechlaminierung, bei der die Polyesterfolie auf ein Metallblech laminiert wird.

Die Laminierung erfolgt zum Schutz der Bleche gegen Korrosion bzw. zu dekorativen Zwecken (Bedruckung). Bei Metalldosen, welche aus folienlaminierten Blechen hergestellt werden, dient die auf der Innenseite auflaminierte Folie als Barriere zwischen verpacktem Gut und Metall. So verhindert die Folie einerseits die Diffusion von korrosiven Bestandteilen des Verpackungsgutes zum Metall und anderseits die Diffusion von Korrosionsprodukten in das Verpackungsgut. Eine auf die Außenseite auflaminierte Folie dient neben dem Korrosionsschutz in der Regel dekorativen Zwecken, wobei eine Konterbedruckung besonders werbewirksam ist und gleichzeitig den Druck schützt.

Gewöhnlich werden Blech-Folienlaminate hergestellt, indem man beispielsweise eine mehrschichtige, siegelfähige Folie mit einem auf eine hohe Temperatur aufgeheizten Blech zusammenbringt. Eine weitere Möglichkeit besteht darin, die Folie mittels eines Klebers auf das Blech aufzukleben. Hierbei werden entweder lösungsmittelbasierende Kleber oder Hotmelts verwendet. Die Folien gemäß vorliegender Erfindung eignen sich besonders zur Laminierung mittels Hotmeltkleber.

Stand der Technik

In der EP-B-474 240 werden Polyesterfolien für die Blechlaminierung beschrieben, die Partikel mit einem mittleren Durchmesser von kleiner gleich 2.5 $\mu$m enthalten. Die Folien bestehen aus einem Copolyester mit einem Schmelzpunkt zwischen 210 und 245 °C. In den Beispielen sind Copolyester mit einem Isophthalsäuregehalt von 9 bis 12 Mol% genannt. Die laminierten Bleche werden zu tiefgezogenen Dosen für die Lebensmittelverpackung verarbeitet.

In der EP-A-586 161 werden Polyesterfolien für die Laminierung auf Blech beschrieben, die einen Copolyester mit einem Schmelzpunkt zwischen 210 und 245 °C und zwei verschieden große Partikel mit einem mittleren Durchmesser von 0.05 bis 0.6 $\mu$m und 0.3 bis 2.5 $\mu$m enthält. Die laminierten Bleche werden zu tiefgezogenen Dosen für die Lebensmittelverpackung verarbeitet. Die Folien sollen eine gute Hitzebeständigkeit haben und den Geschmack des Füllguts nicht verändern.

In der EP-A-1 086 979 werden Polyesterfolien beschrieben, die für die Laminierung auf Bleche durch Aufschmelzen geeignet sind. Die Folien bestehen aus einem Copolyester, der kleiner gleich 18 Mol-% Isophthalsäure und poröse Partikel mit einem mittleren Durchmesser von 0.1 bis 2.5 $\mu$m enthält. Die Rauigkeit ($R_a$) der Folien aus den Beispielen beträgt 12 bis 30 nm.

In der EP-A-1 176 163 werden Folien beschrieben, die zu mindestens 90 Gew.-% aus einem thermoplastischen Polyester bestehen und die Partikel von kleiner als 0.1 $\mu$m und/oder Partikel von größer als 1 $\mu$m enthalten.

Aufgabe

Die Folien gemäß dem Stand der Technik sind nachteilig, weil sie entweder eine zu geringe Barriere gegenüber Metallionen, eine zu hohe Wasserdurchlässigkeit oder eine zu hohe Aromaaufnahme aufweisen. Außerdem weisen sie eine zu geringe mechanische Festigkeit auf, was beispielsweise zu Problemen bei der Bedruckung führt. Die Wickelbarkeit der Folien und die Entstapelbarkeit der mit diesen Folien laminierten Bleche sind aufgrund der niedrigen Rauigkeit schlecht.

Es bestand demnach die Aufgabe, eine biaxial orientierte Polyesterfolie zur Verfügung zu stellen, die sich insbesondere für Hotmelt-Kleberlaminate eignet. Die Folie soll eine hohe Barriere gegenüber Metallionen, eine niedrige Wasserdurchlässigkeit und eine geringe Aromaaufnahme aufweisen. Außerdem soll sie eine hohe mechanische Festigkeit aufweisen, sich gut wickeln lassen und eine hohe Kratzfestigkeit aufweisen; schließlich soll die Entstapelbarkeit der mit dieser Folie laminierten Bleche gut sein. Insbesondere soll die Folie folgende Eigenschaften aufweisen:

- Wasserdampfpermeation
  < 20 g/(m$^2$·d) $H_2O$ bei 15 µm Foliendicke, 23 °C, 50 % r. F. (DIN 53122)
- Sauerstoffpermeation
  < 100 cm$^3$/(m$^2$·d·bar) $O_2$ bei 15 µm Foliendicke (DIN 53380)
- Schwefelwasserstoffpermeation
  < 860 cm$^3$/(m$^2$·d·bar) $H_2S$ bei 15 µm Foliendicke (DIN 53380)
- Reißdehnung in einer Richtung (MD oder TD)
  > 150 % (ISO 527-1/527-2)
- E-Modul in einer Richtung (MD oder TD)
  < 4500 N/mm$^2$, vorzugsweise > 3000 N/mrn$^2$ (ISO-527-1)
- Schrumpf in beiden Richtungen (MD und TD)
  < 1.8 %, > 0 % (DIN 40634)
- bleibende Dehnung
  > 40 % (interne Methode)
- Dichte
  > 1.388 < 1.400 g/cm$^3$ (ASTM D1505-68 Methode C)
- Planare Orientierung Δp
  < 0.140 (interne Methode)
- Rauigkeit $R_a$
  > 35 nm, vorzugsweise < 100 nm (DIN 4762 Cut-off 0.25 mm)
- Rauigkeit $R_t$
  > 350 nm, vorzugsweise < 1500 nm (DIN 4762 Cut-off 0.25 mm)
- Topographie
  100-400 Erhebungen/mm$^2$ > 0.5 µm und < 5 µm (interne Methode)
- Trübung
  < 10 % (ASTM D1003-61 Methode A)

Lösung der Aufgabe

Diese Aufgabe wird gelöst durch eine biaxial orientierte Polyesterfolie, wobei der Polyester zu mindestens 80 Gew.-% aus Ethylenterephthalat-abgeleiteten Einheiten und zu 1 bis 8 Gew.-% aus Ethylenisophthalat-abgeleiteten Einheiten (jeweils bezogen auf die Gesamtmasse an Polyester) besteht, wobei die Folie Partikel mit einem mittleren Durchmesser d$_{50}$ von 0.1 bis 2.0 µm und Partikel mit einem mittleren Durchmesser d$_{50}$ von > 2.5 µm bis < 8 µm enthält.

Detailbeschreibung

Die erfindungsgemäße Polyesterfolie besteht aus Polyester und Additiven. Der Polyester besteht zu mindestens 80 Gew.-%, bevorzugt mindestens 85 Gew.-%, besonders bevorzugt mindestens 90 bis 92 Gew.-% aus Ethylenterephthalat-abgeleiteten Einheiten und zu 1 bis 8 Gew.-%, bevorzugt 2 bis 7 Gew.-%, besonders bevorzugt 3 bis 6 Gew.-% aus Ethylenisophthalat-abgeleiteten Einheiten (jeweils bezogen auf die Gesamtmasse an Polyester). Verwendet man Polyester mit einem geringeren Gehalt an Ethylenisophthalat-abgeleiteten Einheiten als 1 Gew.-%, so reicht die Verformbarkeit der Folien nicht mehr aus für eine Eignung als Blechlaminierfolie. Damit einher geht eine zu geringe Reißdehnung. Verwendet man Polyester mit einem höheren Gehalt an Ethylenisophthalat-abgeleiteten Einheiten als 8 Gew.-%, so verschlechtern sich die Aromabarriere- und Migrationseigenschaften (Wasserdampf-, Gasbarriere) der Folie. Darüber hinaus verschlechtern sich die mechanischen Eigenschaften der Folie, welches sich z. B. in einer verschlechterten Verarbeitbarkeit der Folie bemerkbar macht (sie reißt z. B. leichter).

Die restlichen Monomereinheiten stammen aus anderen aliphatischen oder cycloaliphatischen Diolen bzw. Dicarbonsäuren.

Geeignete andere aliphatische Diole sind beispielsweise Diethylenglykol, Triethylenglykol, aliphatische Glykole der allgemeinen Formel HO-(CH$_2$)$_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen. Von den cycloaliphatischen Diolen sind Cyclohexandiole (insbesondere Cyclohexan-1,4-diol) zu nennen.

Andere cycloaliphatische Dicarbonsäuren sind beispielsweise Cyclohexandicarbonsäuren, insbesondere Cyclohexan-1,4-dicarbonsäure. Von den aliphatischen Dicarbonsäuren sind die (C$_3$ bis C$_{19}$)-Alkandisäuren besonders geeignet, wobei der Alkanteil geradkettig oder verzweigt sein kann.

Die Herstellung der Polyester kann z. B. nach dem Umesterungsverfahren erfolgen. Dabei geht man von Dicarbonsäurediestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Erfindungsgemäße Polyester sind als Handelsprodukte erhältlich.

Unter Additiven werden im Folgenden Stabilisatoren wie UV-Stabilisatoren, Antioxidantien, Hydrolysestabilisatoren, Flammschutzmittel sowie Farbstoffe und Farbpigmente verstanden. Insbesondere aber sind Additive im vorliegenden Fall Partikel (auch Antiblockmittel genannt), z. B. Siliciumdioxidpartikel (amorph oder kristallen), Silikate, wie calzinierte Tone, Titandioxid, Bariumsulfat, Calciumcarbonatpartikel oder organische, gegebenenfalls vernetzte Partikel. Bevorzugt werden Silicium-dioxidpartikel, besonders bevorzugt amorphe Siliciumdioxidpartikel eingesetzt.

Erfindungsgemäß werden Partikel mit zwei unterschiedlichen mittleren Durchmessern $d_{50}$ verwendet, zum einen kleine Partikel mit einem mittleren Durchmesser $d_{50}$ von 0.1 bis 2.0 $\mu$m, bevorzugt 0.2 bis 1.9 $\mu$m, besonders bevorzugt 0.3 bis 1.8 $\mu$m, zum anderen große Partikel mit einem mittleren Durchmesser $d_{50}$ von > 2.5 $\mu$m bis < 8 $\mu$m, bevorzugt 3 bis 7 $\mu$m, besonders bevorzugt 4 bis 6 $\mu$m. Verwendet man kleine Partikel mit einem mittleren Durchmesser von kleiner als 0.1 $\mu$m, so reicht die Grundrauigkeit der Folie nicht mehr aus, um die geforderten Gleiteigenschaften sicherzustellen. Sind die kleinen Partikel größer als 2.0 $\mu$m, werden ebenfalls die Gleiteigenschaften der Folie beeinträchtigt, da die Abstände zwischen den einzelnen Folienerhebungen nun zu groß sind und die Folie vermehrt blockt. Würde man mehr von diesen Partikeln verwenden, so wird die Trübung der Folie beeinträchtigt. Verwendet man große Partikel mit einem mittleren Durchmesser von kleiner gleich 2.5 $\mu$m, dann lassen sich die einzelnen laminierten Blechlagen nicht mehr problemlos entstapeln, und die Wickelbarkeit der Folie wird schlechter. Sind die großen Partikel größer/gleich als 8.0 $\mu$m, so besteht die Gefahr der Bildung von Löchern beim Tiefziehvorgang (Verschlechterung der Barriereeigenschaften); außerdem wird die Herstellbarkeit der Folie schlechter, da die Folie vermehrt zu Abrissen neigt.

Die Partikel werden zweckmäßigerweise während der Herstellung des Polyesters als Dispersion in Ethylenglykol zugegeben. Dazu wird eine Aufschlämmung der Partikel in Ethylenglykol leicht gemahlen und mit Ultraschall dispergiert. Der mittlere Durchmesser $d_{50}$ der Partikel wird an dieser Dispersion bestimmt und entspricht dem mittleren Durchmesser der Partikel in der Folie.

Zweckmäßigerweise werden die kleinen Partikel in einer Menge von 0.01 bis 0.5 Gew.-%, bevorzugt 0.05 bis 0.35 Gew.-%, besonders bevorzugt 0.08 bis 0.2 Gew.-%, eingesetzt (bezogen auf die Masse des Polyesters der Folienschicht, in der die Partikel eingesetzt werden).

Zweckmäßigerweise werden die großen Partikel in einer Menge von 0.01 bis 0.5 Gew.-%, bevorzugt 0.015 bis 0.3 Gew.-%, besonders bevorzugt 0.02 bis 0.25 Gew.-% eingesetzt (bezogen auf die Masse des Polyesters der Folienschicht, in der die Partikel eingesetzt werden).

Die Gesamtdicke der erfindungsgemäßen Polyesterfolie kann innerhalb bestimmter Grenzen variieren. Sie beträgt 10 bis 150 $\mu$m, insbesondere 12 bis 100 $\mu$m, vorzugsweise 15 bis 75 $\mu$m.

Verfahren zur Herstellung

Die Erfindung betrifft weiterhin ein Verfahren zur Herstellung der erfindungsgemäßen Polyesterfolie nach dem an sich bekannten Extrusionsverfahren.

Im Rahmen dieses Verfahrens wird so vorgegangen, dass eine Polymerschmelze in der oben angegebenen Zusammensetzung durch eine Flachdüse extrudiert wird, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Verstreckung wird im Allgemeinen sequenziell durchgeführt. Dabei wird vorzugsweise erst in Längsrichtung (d. h. in Maschinenrichtung = MD-Richtung) und anschließend in Querrichtung (d. h. senkrecht zur Maschinenrichtung = TD-Richtung) verstreckt. Dies führt zu einer Orientierung der Molekülketten. Das Verstrecken in Längsrichtung lässt sich mit Hilfe mehrerer entsprechend dem angestrebten Streckverhältnis verschieden schnell laufender Walzen durchführen. Zum Querverstrecken benutzt man allgemein einen entsprechenden Kluppenrahmen. Die Temperatur, bei der die Verstreckung durchgeführt wird, kann in einem relativ großen Bereich variieren. Im Allgemeinen wird die Längsstreckung bei 80 bis 140 °C und die Querstreckung bei 90 bis 150 °C durchgeführt. Das Längsstreckverhältnis liegt allgemein im Bereich von 2.0:1 bis 4.5:1, bevorzugt von 2.5:1 bis 4:1. Das Querstreckverhältnis liegt allgemein im Bereich von 2.5:1 bis 4.5:1, bevorzugt von 3.0:1 bis 4:1.

Vor der Querstreckung kann man eine oder beide Oberfläche(n) der Folie nach den bekannten Verfahren inline beschichten. Die In-line-Beschichtung kann beispielsweise zu einer verbesserten Haftung der aufgebrachten Druckfarbe oder des Hotmelt-Klebers führen, aber auch zur Verbesserung des antistatischen Verhaltens oder des Verarbeitungsverhaltens dienen. Typische Beschichtungen sind haftvermittelnd, antistatisch, schlupfverbessernd oder dehäsiv wirkende Beschichtungen. Es bietet sich an, diese zusätzlichen Beschichtungen über In-line-Coating mittels wässriger Dispersionen vor dem Streckschritt in Querrichtung auf die Folie aufzubringen. Geeignete Polymere sind Acrylate wie sie beispielsweise beschrieben sind in der WO 94/13476, hydrophile Polyester (5-Na-sulfoisophthalsäurehaltiger PET/IPA-Polyester) wie sie beispielsweise beschrieben sind in der EP-A-0 144 878, US-A-4,252,885 oder EP=A-0 296 620), Polyurethane, Butadiencopolymere mit Acrylnitril oder Methylmethacrylat, Methacrylsäure oder deren Ester.

Für die Herstellung einer Folie mit einem $\Delta p$ von kleiner als 0.14 ist es zweckmäßig, wenn der Flächenstreckfaktor (d. h. das Produkt aus Längs- und Querstreckverhältnis) im Bereich von 9 bis 15, bevorzugt, 10 bis 14, besonders bevorzugt 11 bis 13, liegt.

Bei der nachfolgenden Thermofixierung wird die Folie etwa 0.1 bis 10 s lang bei einer Temperatur von 200 bis 250 °C, bevorzugt 210 bis 245 °C, besonders bevorzugt 220 bis 240 °C, gehalten (Umgebungstemperatur). Niedrigere Fixiertemperaturen führen zu einem zu hohen Schrumpf und höhere Fixiertemperaturen zu einem möglichen Verlust der mechanischen Eigenschaften. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im Allgemeinen im Bereich über 45 mN/m.

Bei der Herstellung der Folie ist gewährgeleistet, dass das Regenerat in einer Konzentration von bis zu 60 Gew.-%, bezogen auf das Gesamtgewicht der Folie, wieder der Extrusion zugeführt werden kann, ohne dass dabei die physikalischen Eigenschaften der Folie nennenswert negativ beeinflusst werden.

Eigenschaften

Durch die erfindungsgemäße Folienzusammensetzung werden die geforderten Eigenschaften erreicht.

Die nachstehende Tabelle (Tabelle 1) fasst die wichtigsten erfindungsgemäßen Folieneigenschaften noch einmal zusammen.

**Tabelle 1**

| Eigenschaft | zweckmäßiger Bereich | bevorzugt | besonders bevorzugt | Einheit | Messmethode / Bemerkung |
|---|---|---|---|---|---|
| Wasserdampfbarriere | < 20 | <18 | <17 | $g/(m^2 \cdot d)H_2O$ | bei 15 µm Foliendicke, 23 °C, 50 % r. F. (DIN 53122) |
| Sauerstoffpermeation | < 100 | < 97 | <94 | $cm^3/(m^2 \cdot d \cdot bar)$ | bei 15 µm Foliendicke (DIN 53380) |
| Schwefelwasserstoffpermeation | < 860 | < 850 | < 840 | $cm^3/(m^2 \cdot d \cdot bar)$ | bei 15 µm Foliendicke (DIN 53380) |
| Reißdehnung in einer Richtung | > 150 | > 160 | > 170 | % | ISO 527-1 / 527-2 |
| E-Modul in einer Richtung | < 4500 > 3000 | < 4400 > 3100 | < 4300 > 3200 | $N/mm^2$ | ISO-527-1 |
| Schrumpf in beiden Richtungen | < 1.8 >0 | < 1.7 >0 | < 1.6 >0 | % | DIN 40634 |
| bleibende Dehnung | > 40 | > 45 | > 50 | % | Intern |
| Dichte | > 1.388 < 1.400 | > 1.389 < 1.399 | > 1.390 < 1.398 | $g/cm^3$ | ASTM D1505-68 Methode C |
| planare Orientierung $\Delta p$ | < 0.140 | < 0.135 | < 0.130 | ./. | Intern |
| $R_a$ | > 35 < 100 | > 40 < 90 | > 45 < 80 | nm | DIN 4762 Cut-off 0.25 mm |
| $R_t$ | > 350 < 1500 | > 450 < 1400 | > 550 < 1300 | nm | DIN 4762 Cut-off 0.25 mm |
| Trübung | <10 | <9 | <8 | % | ASTM D1003-61 Methode A |
| Topographie | 100-400 | 120-380 | 140-360 | Erhebungen/mm² mit Höhe > 0.5, < 5 µm | Intern |

Im Folgenden wird die Erfindung anhand von Beispielen näher erläutert. Für die Bestimmung der Eigenschaften wurden die folgenden Messmethoden verwendet:

Wasserdampfpermeation

Die Wasserdampfpermeation wurde an einer 15 $\mu$m dicken Folien bei 23 °C und 50 % r. F. nach DIN 53122 gemessen.

Sauerstoffpermeation

Die Sauerstoffpermeation wurde an einer 15 $\mu$m dicken Folien nach DIN 53380 gemessen.

Schwefeiwasserstoffpermeation

Die Schwefelwasserstoffpermeation wurde an einer 15 $\mu$m dicken Folien nach DIN 53380 gemessen.

Reißdehnung

Die Reißdehnung in MD und in TD wurde gemäß ISO 527-1/527-2 gemessen.

E-Modul

Der E-Modul in MD und TD wurde gemäß ISO-527-1 bestimmt.

Mittlerer Partikeldurchmesser $d_{50}$

Die Bestimmung des mittleren Durchmessers $d_{50}$ wurde auf einem Horiba LA 500 (Horiba Europe GmbH, Deutschland) durchgeführt. Der Partikelgrößenanalysator beruht auf dem Prinzip der elastischen Laserstreuung an dispergierten Teilchen. Die Messung der Partikel erfolgte an Dispersionen in Ethylenglykol. Zur Herstellung der Dispersionen wurden die Partikel in Ethylenglykol eingerührt, leicht gemahlen und anschließend mit Ultraschall behandelt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50 %-Ordinatenwertes mit der Summenkurve liefert auf der Abszissenachse den gewünschten $d_{50}$-Wert (Volumenmittel $d_v$).

Schrumpf

Der Schrumpf in beiden Richtungen (MD und TD) wurde gemäß DIN 40634 bestimmt.

Bleibende Dehnung

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d. h. bei einer Probenlänge von 220 mm, wurde die Probe automatisch mit gleicher Geschwindigkeit entspannt. Die bleibende Dehnung ist der Dehnungswert, bei dem die Kraft wieder auf null zurückgegangen ist.

Dichte

Die Dichte der Folie wurde nach ASTM D1505-68 Methode C bestimmt.

Planare Orientierung $\Delta$p

Die Bestimmung der planaren Orientierung erfolgt über die Messung der Brechungsindizes mit dem Abbe-Refraktometer.

Probenvorbereitung:

Probengröße und Probenlänge: 60 bis 100 mm
Probenbreite: entspricht Prismenbreite von 10 mm

Zur Bestimmung von $n_{MD}$ und $n_\alpha$ (=$n_z$) muss die zu messende Probe aus der Folie ausgeschnitten werden, bei der die Laufkante der Probe exakt mit der TD-Richtung übereinstimmen muss. Zur Bestimmung von $n_{TD}$ und $n_\alpha$ (= $n_z$) muss die zu messende Probe aus der Folie ausgeschnitten werden, bei der die Laufkante der Probe exakt mit der MD-Richtung übereinstimmen muss. Die Proben sind aus der Mitte der Folienbahn zu entnehmen. Es ist dafür Sorge zu tragen, dass das Abbe-Refraktometer eine Temperatur von 23 °C hat. Auf das vor der Messung gut gesäuberte untere Prisma wird mit Hilfe eines Glasstabes ein wenig Dijodmethan (N = 1.745) bzw. Dijodmethan-Bromnaphthalin-Gemisch aufgetragen. Der Brechungsindex des Gemisches muss größer als 1.685 sein. Darauf wird zuerst die in TD-Richtung ausgeschnittene Probe aufgelegt, so dass die gesamte Prismenoberfläche bedeckt ist. Mit Hilfe eines Papiertaschentuches wird nun die Folie fest auf das Prisma aufgebügelt, so dass die Folie fest und glatt aufliegt. Die überschüssige Flüssigkeit muss abgesaugt werden. Danach wird ein wenig von der Messflüssigkeit auf die Folie getropft. Das zweite Prisma wird heruntergeklappt und fest angedrückt. Nun wird mit Hilfe der rechten Rändelschraube die Anzeigeskala so weit gedreht, bis im Bereich 1.62 bis 1.68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, dass nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Messskala angezeigte Wert wird abgelesen und in das Messprotokoll eingetragen. Dies ist der Brechungsindex in Maschinenrichtung $n_{MD}$. Nun wird die Skala mit der unteren Rändelschraube soweit verdreht, dass der im Okular sichtbare Bereich zwischen 1.49 und 1.50 zu sehen ist.

Jetzt wird der Brechungsindex in $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so dass ein scharfer Übergang zu sehen ist. Diese scharfe Übergangslinie wird mit Hilfe der unteren Rändelschraube in den Kreuzungspunkt der beiden diagonalen Linien gebracht und der auf der Skala angezeigten Wert abgelesen und in die Tabelle eingetragen.

Anschließend wird die Probe gedreht und die entsprechenden Brechungsindizes $n_{MD}$ und $n_\alpha$ (= $n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

Rauigkeit $R_a$ und $R_t$

Die Rauigkeiten $R_a$ und $R_t$ wurden nach DIN 4762 mit einem Cut-off von 0.25 mm bestimmt.

Trübung

Die Trübung wurde gemäß ASTM-D1003-61 Methode A bestimmt.

Topographie

Die Topographie der Oberfläche wurde mit einem Weißlicht-Interferometrie-Mikroskop der Firma Veeco, Typ Wyko NT3300, bestimmt. Gemessen wurde eine Fläche von 0.92 mm x 1.21 mm (480 x 736 Pixel) bei 5.1-facher Vergrößerung. Zur Messung wurde die Probe in einen Ring (Durchmesser 40 mm) eingespannt Die Messung erfolgte im VSI-Modus (phase shifting interferometry). Die Messlänge in z-Richtung wurde auf 20 $\mu$m festgelegt. Eine eventuelle Welligkeit des Musters wurde herausgefiltert.

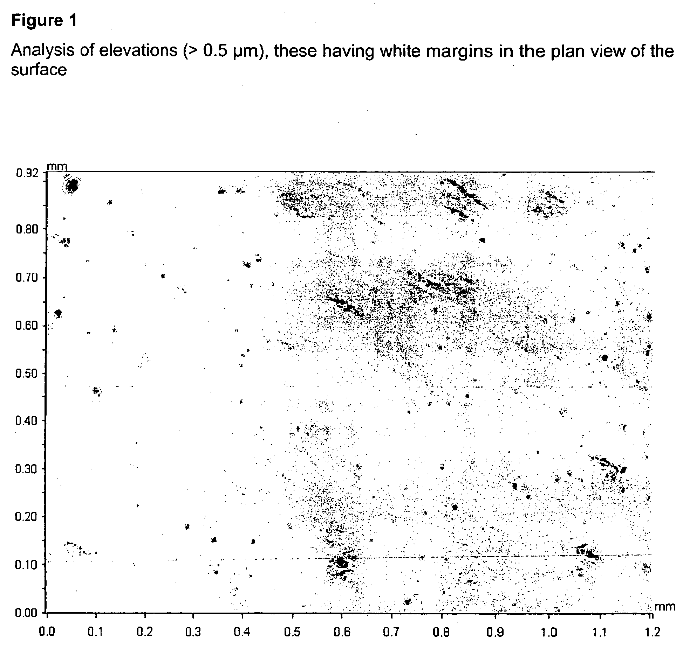

Zur Analyse der Erhebungen wurde die so genannte Multi-Region-Analysis verwendet. Hierbei wurde die Messfläche nach zusammenhängenden Regionen untersucht, die höher als 0.5 $\mu$m sind. Allerdings wurden nur Regionen berücksichtigt, die eine Größe von mindestens 5 Bildpunkten haben. Ein Beispiel ist in Figur 1 gezeigt.

Im Folgenden wird die Erfindung anhand von Beispielen näher erläutert.

**Beispiel 1**

Zur Herstellung der nachfolgend beschriebenen Folie wurden folgende Ausgangsmaterialien verwendet:

| | |
|---|---|
| 90 Gew.-% | Copolyester mit 4.5 Gew.-% Ethylenisophthalat und 95.5 Gew.-% Ethylenterephthalat (Invista, Offenbach, Deutschland) |
| 10 Gew.-% | Masterbatch, bestehend aus |
| 98.7 Gew.% | Polyethylenterephthalat (Invista, Offenbach, Deutschland), |
| 1.0 Gew.-% | wasserfreies Aluminiumsilikat ($d_{50}$= 1.8 $\mu$m, Sachtosil PV, Sachtleben, Duisburg, Deutschland) und |
| 0.3 Gew.-% | amorphes Siliciumdioxid ($d_{50}$= 4.3 $\mu$m, Sylobloc CP4-8191, Grace, Worms, Deutschland) |

Die o. g. Rohstoffe wurden zusammen in einem Extruder aufgeschmolzen und gemischt und durch eine Breitschlitzdüse auf eine gekühlte Abzugswalze extrudiert. Die so erhaltene amorphe Vorfolie wurde dann sequenziell biaxial gestreckt, fixiert und aufgerollt (Enddicke der Folie 15 $\mu$m). Die Bedingungen in den einzelnen Verfahrensschritten waren:

| | | |
|---|---|---|
| Längsstreckung: | Temperatur: | 80 - 120 °C |
| | Längsstreckverhältnis: | 3.2 |
| Querstreckung: | Temperatur: | 80 - 135 °C |
| | Querstreckverhältnis: | 3.8 |
| Fixierung: | | 2 s bei 235 °C |

Die Eigenschaften der so erhaltenen Folie sind in den Tabellen 2 und 3 widergegeben.

**Beispiel 2**

Es wurde wie in Beispiel 1 beschrieben vorgegangen. Die Rohstoffzusammensetzung war jetzt wie folgt:

| | |
|---|---|
| 90 Gew.-% | Copolyester mit 4.5 Gew.-% Ethylenisophthalat und 95.5 Gew.-% Ethylenterephthalat (Invista, Offenbach, Deutschland) |
| 10 Gew.-% | Masterbatch, bestehend aus 98.7 Gew.-% Polyethylenterephthalat (Invista, Offenbach, Deutschland), |
| 1.0 Gew.-% | Calciumcarbonat ($d_{50}$= 1.2 $\mu$m, Omyalite 90, Omya GmbH, Deutschland) und |
| 0.3 Gew.-% | amorphes Siliciumdioxid ($d_{50}$= 4.3 $\mu$m, Sylobloc CP4-8191, Grace, Worms, Deutschland) |

Die Bedingungen in den einzelnen Verfahrensschritten waren:

| | | |
|---|---|---|
| Längsstreckung: | Temperatur: | 80 - 120 °C |
| | Längsstreckverhältnis: | 3.5 |
| Querstreckung: | Temperatur: | 80 - 135 °C |
| | Querstreckverhältnis: | 3.5 |
| Fixierung: | | 2 s bei 235 °C |

Enddicke der Folie 15 μm.

Die Eigenschaften der so erhaltenen Folie sind in den Tabellen 2 und 3 wiedergegeben.

**Beispiel 3**

Es wurde wie in Beispiel 1 beschrieben vorgegangen. Die Rohstoffzusammensetzung war jetzt wie folgt:

| | |
|---|---|
| 90 Gew.-% | Copolyester mit 4.5 Gew.-% Ethylenisophthalat und 95.5 Gew.-% Ethylenterephthalat (Invista, Offenbach, Deutschland) |
| 10 Gew.-% | Masterbatch, bestehend aus |

98.7 Gew.-% Polyethylenterephthalat (Invista, Offenbach, Deutschland),
1.0 Gew.-% beschichtetes Bariumsulfat ($d_{50}$= 1.4 μm, Hombright F, Sachtleben, Duisburg, Deutschland) und
0.3 Gew.-% amorphes Siliciumdioxid ($d_{50}$= 3.4 μm, Sylysia 430, Fuji Sylysia, Japan)

Die Bedingungen in den einzelnen Verfahrensschritten waren:

| | | |
|---|---|---|
| Längsstreckung: | Temperatur: | 80 - 120 °C |
| | Längsstreckverhältnis: | 3.3 |
| Querstreckung: | Temperatur: | 80 - 135 °C |
| | Querstreckverhältnis: | 3.6 |
| Fixierung: | | 2 s bei 235 °C |

Enddicke der Folie 15 μm.

Die Eigenschaften der so erhaltenen Folie sind in den Tabellen 2 und 3 wiedergegeben.

**Vergleichsbeispiel 1**

Es wurde eine Folie hergestellt nach Beispiel 1 der EP-A-586 161. Die Rohstoffzusammensetzung war wie folgt:

Copolyester mit 9 Mol-% Ethylenisophthalat und 91 Mol-% Ethylenterephthalat enthaltend
0.4 Gew.-% Titandioxid ($d_{50}$= 0.4 μm) und
0.01 Gew.-% amorphes Siliciumdioxid ($d_{50}$= 1.3 μm)

Die Bedingungen in den einzelnen Verfahrensschritten waren:

| | | |
|---|---|---|
| Längsstreckung: | Temperatur: | 80 - 125 °C |
| | Längsstreckverhältnis: | 3.0 |
| Querstreckung: | Temperatur: | 80 - 130 °C |
| | Querstreckverhältnis: | 3.0 |
| Fixierung: | | 2 s bei 170 °C |

Die Enddicke der Folie war 25 μm. Die Rauigkeit dieser Folie ist sehr niedrig, was zu Schwierigkeiten bei der Verarbeitung führt. Außerdem ist der Schrumpf zu hoch.

**Tabelle 2**

| Beispiel | IPA-Gehalt [%] | mittlerer Durchmesser Partikel I [μm] | mittlerer Durchmesser Partikel II [μm] |
|---|---|---|---|
| 1 | 4.05 | 4.3 | 1.8 |
| 2 | 4.05 | 4.3 | 1.2 |
| 3 | 4.05 | 3.4 | 1.4 |
| V1 | 9.0 | 1.3 | 0.4 |

**Tabelle 3**

| Beispiel | Wasser-dampfper-meation [g/(m²·d)] | Sauerstoffpermeation [cm³/(m²·d·bar)] | Schwefel-wasserstoff-permeation [cm³/(m²·d·bar)] | Reißdehnung MD [%] | E-Modul MD [N/mm²] | Schrumpf MD/TD [%] | bleibende Dehnung [%] | Dichte [g/cm³] | $\Delta p$ | $R_a$ [nm] | $R_t$ [nm] | Trübung [%] | Topographie [Erhebungen >0.5,<5 μm / mm²] |
|---|---|---|---|---|---|---|---|---|---|---|---|---|---|
| 1 | 16.3 | 92 | 830 | 190 | 4050 | 1.0 / 0.8 | 55 | 1.392 | 0.124 | 50 | 1050 | 5.2 | 182 |
| 2 | 16.1 | 91 | 825 | 175 | 4180 | 1.1 / 0.7 | 54 | 1.393 | 0.127 | 51 | 1090 | 5.1 | 169 |
| 3 | 16.5 | 93 | 838 | 185 | 4110 | 1.0 / 0.9 | 52 | 1.391 | 0.123 | 45 | 950 | 5.0 | 148 |
| V1 | 16.9 | 98 | 850 | 195 | 3700 | 1.8 / 2.1 | 56 | 1.390 | 0.121 | 25 | 300 | 5.3 | 0 |

## EP 1 857 496 B1

**Patentansprüche**

1. Biaxial orientierte Polyesterfolie, wobei der Polyester zu mindestens 80 Gew.-% aus Ethylenterephthalat-abgeleiteten Einheiten und zu 1 bis 8 Gew.-% aus Ethylenisophthalat-abgeleiteten Einheiten (jeweils bezogen auf die Gesamtmasse an Polyester) besteht, **dadurch gekennzeichnet, dass** die Folie Partikel mit einem mittleren Durchmesser $d_{50}$ von 0.1 bis 2.0 $\mu$m und Partikel mit einem mittleren Durchmesser $d_{50}$ von > 2.5 $\mu$m bis < 8 $\mu$m enthält.

2. Verfahren zur Herstellung einer Folie gemäß Anspruch 1, dadurch gekennzeichnen, dass man eine Polyesterschmelze, wobei der Polyester zu mindestens 80 Gew.-% aus Ethylenterephthalat-abgeleiteten Einheiten und zu 1 bis 8 Gew.-% aus Ethylenisophthalat-abgeleiteten Einheiten (jeweils bezogen auf die Gesamtmasse an Polyester) besteht und wobei der Polyester Partikel mit einem mittleren Durchmesser $d_{50}$ von 0.1 bis 2.0 $\mu$m und partikel mit einem mittleren Durchmesser $d_{50}$ von > 2.5 $\mu$m bis < 8 $\mu$m enthält, durch eine Flachdüse extrudiert, die so erhaltene Folie zur Verfestigung auf einer oder mehreren Walze/n abzieht, die Folie anschließend biaxial streckt (orientiert), die biaxial gestreckte Folie thermofixiert und gegebenenfalls an der zur Behandlung vorgesehenen Oberflächenschicht corona- oder flammbehandelt und dann aufwickelt.

3. Metalllaminat enthaltend ein Metallblech und eine Folie gemäß Anspruch 1.

4. Metalllaminat nach Anspruch 3, wobei sich zwischen dem Metallblech und der Folie ein Kleber befindet.

5. Metalllaminat nach Anspruch 4, **dadurch gekennzeichnet, dass** der Kleber ein feuchtigkeitshärtender Polyurethankleber ist.

6. Formkörper aus einem Metalllaminat nach Anspruch 3, 4 oder 5,

7. Verwendung einer Folie nach Anspruch 1 zur Laminierung von Blechen.

**Claims**

1. A biaxially oriented polyester film, where the polyester is composed of at least 80 % by weight of ethylene-terephthalate-derived units and of from 1 to 8 % by weight of ethylene-isophthalate-derived units (based in each case on the total weight of polyester), which comprises particles whose median diameter $d_{50}$ is from 0.1 to 2.0 $\mu$m and particles whose median diameter $d_{50}$ is from > 2.5 $\mu$m to < 8 $\mu$m.

2. A process for production of a film as claimed in claim 1, which comprises extruding, through a flat-film die, a polyester melt, where the polyester is composed of at least 80 % by weight of ethylene-terephthalate-derived units and of from 1 to 8 % by weight of ethylene-isophthalate-derived units (based in each case on the total weight of polyester), and where the polyester comprises particles whose median diameter $d_{50}$ is from 0.1 to 2.0 $\mu$m and particles whose median diameter $d_{50}$ is from > 2.5 $\mu$m to < 8 $\mu$m, drawing off the resultant film for solidification on one or more rolls, then biaxially stretching (orienting) the film, heat-setting the biaxially stretched film, and, if appropriate, corona- or flame-treating it on the surface intended for treatment, and then winding it up.

3. A metal laminate comprising sheet metal and a film as claimed in claim 1.

4. The metal laminate as claimed in claim 3, where there is an adhesive between the sheet metal and the film.

5. The metal laminate as claimed in claim 4, wherein the adhesive is a moisture-curing polyurethane adhesive.

6. A molding composed of a metal laminate as claimed in claim 3, 4, or 5.

7. The use of a film as claimed in claim 1 for lamination of sheet metal.

**Revendications**

1. Film polyester à orientation biaxiale, où le polyester est constitué d'au moins 80% en poids d'unités dérivées d'éthylène téréphtalate et de 1 à 8% en poids d'unités dérivées d'éthylène isophtalate (respectivement par rapport à la masse totale de polyester), **caractérisé en ce que** le film contient des particules avec un diamètre moyen $d_{50}$ de 0,1 à 2,0 $\mu$m et des particules avec un diamètre moyen $d_{50}$ > 2,5 $\mu$m et < 8 $\mu$m.

2. Procédé de fabrication d'un film selon la revendication 1, **caractérisé en ce que** l'on extrude par une filière plate une coulée de polyester à l'état fondu, où le polyester est constitué d'au moins 80% en poids d'unités dérivées d'éthylène téréphtalate et de 1 à 8% en poids d'unités dérivées d'éthylène isophtalate (respectivement par rapport à la masse totale de polyester) et où le polyester contient des particules avec un diamètre moyen $d_{50}$ de 0,1 à 2,0 $\mu$m et des particules avec un diamètre moyen $d_{50}$ > 2,5 $\mu$m et < 8 $\mu$m, que l'on déroule le film ainsi obtenu sur un ou plusieurs rouleau(x) pour le renforcement, qu'ensuite on étire (oriente) le film de manière biaxiale, que l'on fixe thermiquement le film étiré de manière biaxiale et qu'éventuellement on traite la couche de surface prévue pour le traitement avec un procédé corona ou par flammage et qu'on enroule ensuite.

3. Stratifié métallique contenant une tôle métallique et un film selon la revendication 1.

4. Stratifié métallique selon la revendication 3, où un adhésif se trouve entre la tôle métallique et le film.

5. Stratifié métallique selon la revendication 4, **caractérisé en ce que** l'adhésif est un adhésif de polyuréthane durcissant à l'humidité.

6. Corps moulé constitué d'un stratifié métallique selon les revendications 3, 4 ou 5.

7. Utilisation d'un film selon la revendication 1 pour la stratification de tôles.

## Figure 1

Analysis of elevations (> 0.5 μm), these having white margins in the plan view of the surface

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 474240 B
- EP 586161 A
- EP 1086979 A
- EP 1176163 A
- WO 9413476 A
- EP 0144878 A
- US 4252885 A